# EUROPEAN PATENT APPLICATION

(11) **EP 4 285 734 A1**
(43) Date of publication of application: **06.12.2023**
(21) Application number: 22780963.9
(22) Date of filing: 29.03.2022
(51) Int. Cl.: A23J 3/14, A23L 5/00

(54) **DENATURED PROTEIN MATERIAL**

(30) Priority: 30.03.2021 JP 2021056902
(71) Applicant: Fuji Oil Holdings Inc., Izumisano-shi, Osaka 598-8540 (JP)
(72) Inventor: KANO, Hiroshi, Izumisano-shi, Osaka 598-8540 (JP); UEYAMA, Tomoki, Izumisano-shi, Osaka 598-8540 (JP); INOUE, Ryota, Izumisano-shi, Osaka 598-8540 (JP)
(74) Representative: Boult Wade Tennant LLP
(86) International application number: PCT/JP2022/015616
(87) International publication number: WO 2022/210752

(57) **Abstract**

Provided is a denatured protein material having all the characteristics of a) and b): a) according to the result of measuring molecular weight distribution, the area ratio for portions where the molecular weight is at least 2,000 Da and less than 20,000 Da is 45-90%; and b) when 250 mM of guanidine hydrochloride is added to an aqueous solution of denatured protein material having a crude protein concentration of 0.1%, the solution does not become cloudy, and when 2 M of ammonium sulfate is added, the solution becomes cloudy.

## Description

### Technical Field

### Related Application

This application claims the benefit of priority of Japanese Patent Application No. 2021-056902, filed on March 30, 2021. The priority application is hereby incorporated by reference in its entirety.

The present invention relates to a denatured protein material, and a method for producing the same.

### Background Art

At present, oil-in-water emulsion or water-in-oil emulsion that contains lipid and protein, and a variety of emulsified foods that contain the emulsion have been manufactured.

A sodium caseinate is typically used for the emulsions and the emulsified foods as a protein having emulsifying capacity. Requirement for further emulsifying capacity has been met with use of synthetic emulsifier, such as glycerin fatty acid ester. There is, however, consumer's demand to avoid a food that contains such synthetic emulsifier. In addition, sodium caseinate, having been widely used as a protein having emulsifying capacity, is a milk protein, that is, an animal protein. Now, recent instability of food supply due to population growth has demanded approaches towards reduction of consumption of animal proteins, and switching from animal protein-containing foods to vegetable protein-containing foods.

Reduction of an amount of the milk protein used, however, occasionally results in insufficient emulsifying effect. In addition, the vegetable protein such as soybean protein and pea protein is usually inferior to the milk protein in terms of high viscosity when dissolved in a solution, solubility, mineral resistance, and heating resistance typically during retort heating, and is likely to cause a problem such as thickening and occurring aggregation. Thus, an adding amount of the vegetable protein tends to be limited. Thus, it is the current situation that using vegetable protein as a substitute for milk protein is not progressed.

For this reason, several techniques for improving the vegetable protein material per se have been proposed. For example, Patent Document 1 proposes a technique by which soy protein isolate, after adding of a reducing sugar, is heated to promote the Maillard reaction, while concurrently allowing an enzymatic digestion. Patent Document 2 proposes a technique by which a protein is treated under heating at 140°C for approximately 30 seconds, then is decomposed with enzyme, and is then allowed to contain an oil therein. Patent Document 3 discloses an emulsion composition that contains a specific vegetable protein material, fat, and an optional carbohydrate mixed according to a predetermined proportion. These disclosures have aimed at modifying the vegetable protein materials to lower the viscosity and to improve the emulsifying capacity, while maintaining the solubility of protein.

### Prior Art Documents

### Patent Documents

Patent Document 1: WO 2009/84529 A1
Patent Document 2: WO 2017/141934 A1
Patent Document 3: WO 2019/189810 A1

### Disclosure of the Invention

### Technical Problem

An object of the present invention is to provide a protein material having an improved emulsifying capacity.

### Solution to Problem

The present inventors have intensively studied to solve the above problem. As a result, they have found that a protein material having an improved emulsifying capacity is obtainable by denaturing the protein material and making it have a specific molecular weight distribution. The present invention has been completed by the finding.

That is, the present invention relates to:
(1) a denatured protein material having both of features a) and b) below:
   a) a measured molecular weight distribution shows that an area ratio of 2,000 Da or more and less than 20,000 Da is 45 to 90%; and
   b) an aqueous solution of the denatured protein material with a crude protein concentration of 0.1% remaining unturbid upon addition of a 250 mM guanidine hydrochloride solution, and becoming turbid upon addition of 2 M ammonium sulfate;
(2) the denatured protein material of (1), wherein a measured molecular weight distribution shows that an area ratio of less than 2,000 Da is 45% or less;
(3) the denatured protein material of (1), wherein a measured molecular weight distribution shows that an area ratio of 10,000 Da or more is less than 50%;
(4) the denatured protein material of (1), wherein a measured molecular weight distribution shows that an area ratio of less than 2,000 Da is 45% or less, and an area ratio of 10,000 Da or more is less than 50%;
(5) the denatured protein material of (1), wherein an aqueous solution of the denatured protein material, prepared while adjusting the protein content to 10% by mass, and pH to 7, demonstrates an OD660nm of 0.5 or less;
(6) the denatured protein material of (4), wherein an aqueous solution of the denatured protein material, prepared while adjusting the protein content to 10% by mass, and pH to 7, demonstrates an OD660nm of 0.5 or less;
(7) the denatured protein material of (1), being free of an animal protein;
(8) the denatured protein material of (1), being derived from bean;
(9) the denatured protein material of (4), being derived from bean; and
(10) the denatured protein material of (6), being derived from bean.

### Effect of the Invention

The present invention enables to provide a protein material having an improved emulsifying capacity. With use of the denatured protein material of the present invention, an emulsified food product having an improved emulsion stability may be produced. With use of the denatured protein material of the present invention, it becomes possible in one example to produce an emulsified food product having emulsion stability, even without using a synthetic emulsifier. With use of the denatured protein material of the present invention prepared from a vegetable protein material, it becomes possible in another example to produce an emulsified food product having an emulsion stability, even without using an animal protein material. Furthermore, with use of the denatured protein material started from a milk protein, it becomes possible in still another example to reduce the amount of consumption of the milk protein while maintaining the emulsifying capacity.

### Brief Description of Drawings

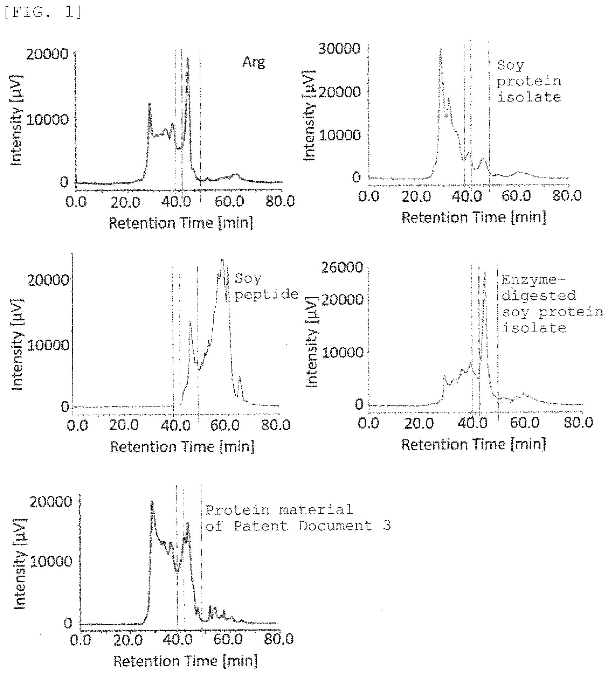

[Fig. 1] Fig. 1 is a drawing that contains measurement charts of molecular weight distributions of Arg, soy protein isolate, soybean peptide, and enzyme-digested soy protein isolate, which are described in Test Examples 1 and 2, and a protein material of Patent Document 3. The ordinate represents intensity (µV), and the abscissa represents retention time (minutes). The vertical lines in each chart indicate positions of 20,000 Da, 10,000 Da, and 2,000 Da from the left.

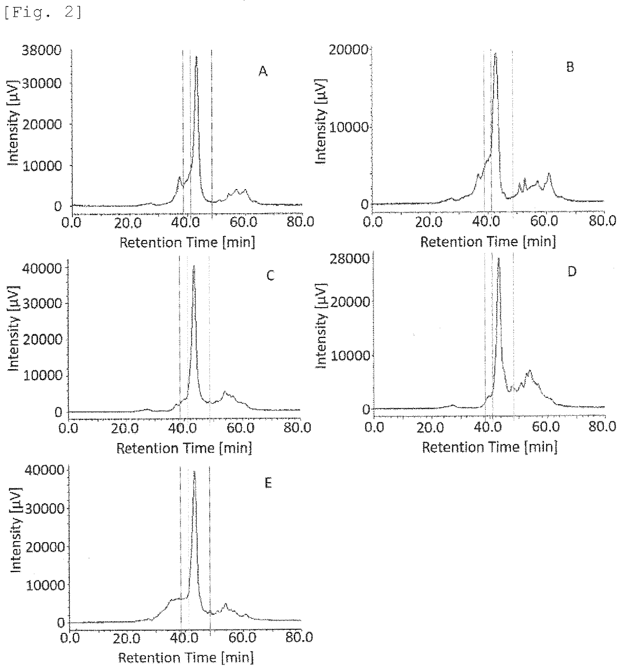

[Fig. 2] Fig. 2 is a drawing that contains measurement charts of molecular weight distribution of denatured protein materials A to E, described in Example 1. The ordinate represents intensity (µV), and the abscissa represents retention time (minutes). The vertical lines in each chart indicate positions of 20,000 Da, 10,000 Da, and 2,000 Da from the left.

### Mode for Carrying Out the Invention

A denatured protein material according to a mode of the present invention has both of features below:
a) a measured molecular weight distribution shows that an area ratio of 2,000 Da or more and less than 20,000 Da is 45 to 90%; and
b) an aqueous solution of a denatured protein material with a crude protein concentration of 0.1% remains unturbid upon addition of a 250 mM guanidine hydrochloride solution, and becomes turbid upon addition of 2 M ammonium sulfate.

In one aspect, the present invention provides a denatured protein material. In another aspect, the present invention provides a method for producing the denatured protein material. In still another aspect, the present invention provides a food that contains the denatured protein material. In yet another aspect, the present invention provides a composition that contains the denatured protein material. Embodiments of the present invention will be detailed below.

The "protein material" in the present specification conceptionally means a food material that contains protein as a major ingredient, and is used as a raw material for various processed foods and beverages. The "denatured protein material" in the present specification means a food material that contains a denatured protein as a major ingredient.

Protein from which the denatured protein material of the present disclosure is derived may be any of animal protein, vegetable protein, and mixture thereof. The animal protein is exemplified by those derived from cattle, pig, chicken, egg, and milk. The vegetable protein is exemplified by those derived from beans such as soybean, pea, mung bean, broad bean, lupin, chickpea, kidney bean, lentil bean, and black-eyed pea; seeds such as sesame, canola seed, coconut seed, and almond seed; grains such as corn, buckwheat, wheat, and rice; vegetable; and fruit. In one embodiment, in the denatured protein material of this aspect, preferably 50% by mass or more of the protein is derived from vegetable protein, the percentage may be, for example, 55% by mass or larger, 60% by mass or larger, 65% by mass or larger, 70% by mass or larger, 75% by mass or larger, 80% by mass or larger, 85% by mass or larger, 90% by mass or larger, 95% by mass or larger, or 97% by mass or larger, and may most preferably be 100% by mass. In other embodiments, the denatured protein material is free of milk protein-derived protein material. In a preferred embodiment, the denatured protein material is prepared from a protein of bean. In a further preferred embodiment, the denatured protein material is prepared from soybean protein, pea protein, mung bean protein, or broad bean protein. For example, a soybean-derived protein material is prepared by further concentrating a soybean raw material such as defatted soybean or whole bean; typically encompasses soy protein isolate, concentrated soybean protein, and powdered soy milk; and also conceptionally encompasses various processed products of these materials.

### a) Molecular weight distribution

The denatured protein material of the present disclosure has an area ratio of a molecular weight distribution, measured by gel filtration, of 45 to 90% for 2,000 Da or more and less than 20,000 Da; for example, 50 to 85%, 55 to 80%, 55 to 75%, or 60 to 70%. The protein material described in Patent Document 3 has an area ratio of more than 55% for 20,000 Da or more, and is therefore different in this point from the denatured protein material of the present disclosure. In a certain embodiment, the area ratio is 45% or less for less than 2,000 Da; for example, 40% or less, 35% or less, 30% or less, or 25% or less. The lower limit, although not particularly limited, is exemplified by 0% or more, 1% or more, 2% or more, 5% or more, 100 or more, or 15% or more. In another embodiment, the area ratio is less than 50% for 10,000 Da or more; for example, 5 to 45%, 10 to 40%, or 15 to 35%. In yet another embodiment, the area ratio is less than 55% for 20,000 Da or more; for example, 50% or less, 40% or less, 30% or less, 25% or less, 20% or less, or 15% or less.

The molecular weight distribution of the denatured protein material, fallen within such ranges, indicates that a moderately decomposed medium-molecular-weight fraction prevails, meanwhile an undecomposed protein or a highly decomposed low-molecular-weight peptide is scarce. Measurement of the molecular weight distribution will follow a method described later.

### b) Addition of guanidine hydrochloride, and addition of ammonium sulfate

The denatured protein material of the present disclosure, in the form of aqueous solution, does not become turbid upon addition of guanidine hydrochloride. This is an indicator of sufficient denaturation of protein, based on which the protein material of the present disclosure is judged to be "denatured protein material". For example, undenatured protein such as soy protein isolate and sodium caseinate will become turbid upon addition of guanidine hydrochloride. In the context of the present specification, absence of turbidity upon addition of guanidine hydrochloride may be confirmed by an event that an aqueous solution containing 0.1% crude protein and 250 mM guanidine hydrochloride does not look turbid to the eye, or the aqueous solution demonstrates an OD660nm of less than 0.3, which is typically 0.2 or less, 0.1 or less, or 0. Meanwhile, the denatured protein material of the present disclosure, in the form of aqueous solution, becomes turbid upon addition of ammonium sulfate. This is an indicator of a certain degree of polymerization of protein, indicating that the protein has not been excessively degraded down to dipeptide or tripeptide. In the context of the present specification, presence of turbidity upon addition of ammonium sulfate may be confirmed by an event that an aqueous solution containing 0.1% crude protein and 2 M ammonium sulfate looks turbid to the eye, or the aqueous solution demonstrates an OD660nm of 0.3 or more, which is typically 0.4 or more, or 0.5 or more. Procedures of addition of guanidine hydrochloride and ammonium sulfate will follow the methods described later.

The denatured protein material of the present disclosure satisfies the features a) and b) above. Other features of the denatured protein material in more specific embodiments will be described below, without particularly limiting the disclosure.

### c) Purity of protein

In a more specific embodiment, the denatured protein material of the present disclosure preferably has a protein content in the solid content of 40% by mass or more, which is preferably, for example, 50% by mass or more, 60% by mass or more, 70% by mass or more, 80% by mass or more, 85% by mass or more, or 90% by mass or more. Raw material of the denatured protein material that falls within the aforementioned range is preferably protein isolate, which is more specifically soy protein isolate in a case where the protein isolate is prepared from a soybean-derived protein material. Note that the denatured protein material, if prepared from a low-protein-content material such as soy milk, would degrade the material versatility, since a larger amount of blending will be necessary to produce protein-enriched emulsified food products.

### d) Viscosity

In a more specific embodiment, viscosity of a solution of the denatured protein material of the present disclosure, measured under a certain conditions, is preferably low. More specifically, a 10% by mass aqueous protein solution measured at 60°C preferably demonstrates a viscosity of 50 mPa·s or less, for example, 40 mPa·s or less, 35 mPa·s or less, 30 mPa·s or less, 20 mPa·s or less, 15 mPa·s or less, 10 mPa-s or less, or 5 mPa·s or less. The lower limit of the viscosity, although not particularly limited, is exemplified by 0.1 mPa·s or more, 0.5 mPa·s or more, and 1 mPa·s or more. Measurement of the viscosity will follow a method described later.

### e) Solubility

In a more specific embodiment, the denatured protein material of the present disclosure has a solubility in water at room temperature of 20% by mass or more, for example, 25% by mass or more. The upper limit of the solubility, although not particularly limited, is exemplified by 55% by mass or less, 50% by mass or less, 45% by mass or less, 40% by mass or less, and 35% by mass or less.

### f) Turbidity

In a more specific embodiment, the aqueous solution of the denatured protein material of the present disclosure is preferably less turbid, and more preferably clear. More specifically, a 10% aqueous solution (pH 7) of the denatured protein material of the present disclosure, prepared and allowed to stand still overnight, preferably demonstrates an OD660nm value at room temperature of 0.5 or less, for example, 0.3 or less, 0.2 or less, 0.1 or less, or 0.

In a specific embodiment, the denatured protein material of the present disclosure satisfies the numerical values defined by e) Solubility and/or f) Turbidity described above, based on which the protein material of the present disclosure is also referred to as "water-soluble denatured protein material".

### g) Median diameter of emulsion

In a more specific embodiment, an emulsion that contains the denatured protein material of the present disclosure demonstrates a median diameter of 4 µm or less, for example, 3 um or less, 2 µm or less, or 1 µm or less. More specifically, the aforementioned median diameter is demonstrated by an emulsion that contains the denatured protein material of the present disclosure containing 1% or more crude protein, for example 0.5% or more, 0.1% or more, or 0.05% or more. Preparation of the emulsion and measurement of the median diameter will follow methods described later.

### Denaturation/molecular weight distribution adjustment treatment

The denatured protein material of the present disclosure is obtainable by combining denaturation of protein, with adjustment of the molecular weight distribution. The treatment for denaturing protein is exemplified by pH adjustment (for example, acid treatment and alkali treatment), denaturant treatment, heating, cooling, high-pressure treatment, organic solvent treatment, mineral addition, supercritical treatment, sonication, electrolysis, and combination of these treatments. The treatment for adjusting the molecular weight distribution is exemplified by enzyme digestion, filtration, gel filtration, chromatography, centrifugation, electrophoresis, dialysis, and combination of these methods. The sequential order and the number of times of the treatment for denaturing protein and the treatment for adjusting the molecular weight distribution are not particularly limited, so that the treatment for denaturing the protein may precede the treatment for adjusting the molecular weight distribution, or, the treatment for adjusting the molecular weight distribution may precede the treatment for denaturing protein, or, both treatments may take place concurrently. Alternatively, the treatment for denaturing protein may take place between two or more rounds of the treatment for adjusting the molecular weight distribution, or, the treatment for adjusting the molecular weight distribution may take place between two or more rounds of the treatment for denaturing protein, or, two or more rounds of each of the treatments may take place in a freely selectable sequential order. Note, that the treatment for adjusting the molecular weight distribution is omissible, if the treatment for denaturing protein were enough to achieve a desired molecular weight distribution. These treatments, when combined and repeated multiple times, may start directly from the raw material without break, or may take place after a while. For example, a commercially available product having undergone a certain treatment may be used as a raw material for other treatment. In the present specification, this sort of treatment will be referred to as "denaturation/molecular weight distribution adjustment treatment", for convenience. As long as these features are satisfied, a denatured protein material having undergone the denaturation/molecular weight distribution adjustment treatment may be mixed with a protein not having undergone the denaturation/molecular weight distribution adjustment treatment, to yield a specific denatured protein material. In this case, the proportion of both materials (protein material having undergone denaturation/molecular weight distribution adjustment treatment: protein not having undergone denaturation/molecular weight distribution adjustment treatment) is properly adjustable within a range the aforementioned features may be satisfied, which is typically 1:99 to 99:1 on the mass basis, and may also be 50:50 to 95:5, or 75:25 to 90:10. In an embodiment, the denatured protein material of the present disclosure is composed of a vegetable protein material having undergone the denaturation/molecular weight distribution adjustment treatment.

Conditions of the treatment for denaturing protein, such as concentration of acid, alkali, organic solvent or mineral, temperature, pressure, output intensity, current and time, may be properly determined by those skilled in the art. The pH adjustment may take place within a pH range whose upper limit value and lower limit value are freely selectable from pH 2, 2.5, 3, 3.5, 4, 4.5, 5, 5.5, 6, 6.5, 7, 7.5, 8, 8.5, 9, 9.5, 10, 10.5, 11, 11.5, and 12, and typically within a pH range from 2 to 12. The acid treatment may rely upon addition of acid, or fermentation such as lactic acid fermentation. Acid to be added is exemplified by inorganic acids such as hydrochloric acid and phosphoric acid; and organic acids such as acetic acid, lactic acid, citric acid, gluconic acid, phytic acid, sorbic acid, adipic acid, succinic acid, tartaric acid, fumaric acid, malic acid, and ascorbic acid. Alternatively, the acid may be added with use of acid-containing food or beverage, such as fruit juice or concentrated fruit juice of lemon, fermented milk, yogurt, or brewed vinegar. The alkali treatment may rely upon addition of alkali such as sodium hydroxide or potassium hydroxide. The denaturant treatment may rely upon addition of denaturant such as guanidine hydrochloride, urea, arginine or PEG. For the heating or cooling, the heating temperature may have the upper limit value and the lower limit value freely selectable from 60°C, 70°C, 80°C, 90°C, 100°C, 110°C, 120°C, 125°C, 130°C, 135°C, 140°C, 145°C, and 150°C, and typically falls within a range from 60°C to 150°C. For the cooling, the cooling temperature may have the upper limit value and the lower limit value freely selectable from -10°C, -15°C, -20°C, -25°C, -30°C, -35°C, -40°C, -45°C, - 50°C, -55°C, -60°C, -65°C, -70°C, -75°C, and typically falls within a range from -10°C to -75°C. The heating time and cooling time may have the upper limit value and the lower limit value freely selectable from 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes, and typically falls within a range from 5 seconds to 200 minutes. For high-pressure treatment, the pressurizing condition may have the upper limit value or the lower limit value freely selectable from 100 MPa, 200 MPa, 300 MPa, 400 MPa, 500 MPa, 600 MPa, 700 MPa, 800 MPa, 900 MPa, and 1,000 MPa, and typically falls within a range from 100 MPa to 1,000 MPa. The organic solvent usable for the organic acid treatment is exemplified by alcohol and ketone, for example, ethanol or acetone. The mineral usable for the mineral addition is exemplified by divalent metal ions such as calcium and magnesium. The supercritical treatment may take place typically with use of supercritical carbon dioxide, at a temperature of approximately 30°C or above, and at approximately 7 MPa or above. The sonication may take place typically at a frequency of 100 kHz to 2 MHz, and an output of 100 to 1,000 W. The electrolysis may take place typically by applying a voltage of 100 mV to 1,000 mV, to an aqueous protein solution. In a specific embodiment, the treatment for denaturing protein is selected from denaturant treatment, heating, and combination thereof.

Those skilled in the art may properly determine conditions of the treatment for adjusting the molecular weight distribution, such as types of enzyme and filter material, rotational speed, current and time. The enzyme usable here is exemplified by proteases that are classified into any of "metal protease", "acid protease", "thiol protease" and "serine protease". The reaction may proceed at a reaction temperature of 20 to 80°C, and preferably at 40 to 60°C. The filter material is exemplified by filter paper, filter cloth, diatomaceous earth, ceramic, glass and membrane. Carrier for the gel filtration is exemplified by dextran and agarose. Conditions for centrifugation may typically be 1,000 to 3,000 G, and 5 to 20 minutes.

Any other material may be added, but not necessarily, to the denatured protein material of the present disclosure, without deteriorating the function thereof. Such other material is exemplified by seasoning, acidulant, sweetener, spice, colorant, flavor, salt, saccharide, antioxidant, vitamin, stabilizer, thickener, carrier, excipient, lubricant, surfactant, propellant, preservative, chelating agent and pH adjusting agent. In a specific embodiment, the denatured protein material of the present disclosure does not contain animal-derived component.

The form of the denatured protein material of the present disclosure is not particularly limited, and is exemplified by solids such as powder, granule and pellets; semi-solids such as paste; and liquids such as solution, suspension and emulsion. In a specific embodiment, the denatured protein is a powder, and for example, is prepared by drying process such as spray drying or freeze drying.

The denatured protein material of the present disclosure may be blended in food, or may be used as a raw material for composition. The denatured protein material of the present disclosure may be suitably used for emulsified food and emulsified composition, for its improved emulsifying capacity. Applications and amount of addition of the denatured protein material of the present disclosure may be properly selected and determined by those skilled in the art. In an embodiment, the amount of addition of the denatured protein material of the present disclosure is exemplified by 0.1 to 70% by mass, 0.5 to 60% by mass, 1 to 50% by mass, 5 to 45% by mass, and 10 to 40% by mass, relative to the food or composition.

### (Measuring method)

Measurement of component and physical properties of the denatured protein material in the present specification are according to the following methods.

### <Protein Content>

A protein content is measured by Kjeldahl method. Specifically, mass of nitrogen from a protein material dried at 105°C for 12 hours is measured by Kjeldahl method and expressed as "by mass" as the protein content in the dried product. The nitrogen conversion coefficient is 6.25. Basically, it is calculated by rounding off to one decimal place.

### <Molecular weight distribution>

A sample solution is prepared by adding an eluent to a protein material to adjust a concentration of the solution to 0.1% by mass, and then filtering the solution with a 0.2 µm filter. A gel filtration system is assembled by connecting two types of columns in series. First, known protein or the like as a molecular weight marker (Table 1) is charged, and a calibration curve is obtained in the relationship between the molecular weight and the retention time. Next, the sample solution is charged, and the content ratio% of each molecular weight fraction is determined by the ratio of the area of specific molecular weight range (time range) to the total absorbance chart area (1st column: "TSK gel G3000SW_{XL}" (Manufactured by SIGMA-ALDRICH), 2nd column: "TSK gel G2000SW_{XL}" (manufactured by SIGMA-ALDRICH), eluent: 1% SDS + 1.17% NaCl + 50 mM phosphate buffer (pH 7.0), 23°C, flow rate: 0.4 ml/min, detection: UV220nm). Basically, it is calculated by rounding off to one decimal place.

**[Table 1]**

| Molecular weight marker | |
|---|---|
| Marker | Molecular weight |
| Thyroglobulin | 335,000 |
| γ-globulin | 150,000 |
| Albumin | 67,000 |
| Peroxidase | 43,000 |
| Myoglobin | 18,000 |
| Cytochrome C | 12,384 |
| Insulin | 5,734 |
| Glutathione | 307 |
| p-aminobenzoic acid | 137 |

### <Addition of guanidine hydrochloride>

An aqueous solution of a protein material, having a crude protein concentration of 0.2%, is prepared. If turbidity observed during preparation of the aqueous solution, an approximately 1 to 10% aqueous solution once prepared is centrifuged, the supernatant is collected, and then diluted to adjust the crude protein concentration to 0.2%, thereby yielding the sample solution. An equivolume of a guanidine hydrochloride solution is then added thereto, to prepare a solution that contains 0.1% crude protein and 250 mM guanidine hydrochloride, and the solution is allowed to stand overnight in a refrigerator. The solution is visually checked for turbidity. Concurrently, the turbidity is measured at a wavelength of 660 nm, with use of a 10 mm glass cell.

### <Addition of ammonium sulfate >

An aqueous solution of a protein material, having a crude protein concentration of 0.2%, is prepared. If turbidity observed during preparation of the aqueous solution, an approximately 1 to 10% aqueous solution once prepared is centrifuged, the supernatant is collected, and then diluted to adjust the crude protein concentration to 0.2%, thereby yielding the sample solution. An equivolume of an ammonium sulfate solution is then added thereto, to prepare a solution that contains 0.1% crude protein and 2 M ammonium sulfate, and the solution is allowed to stand overnight in a refrigerator. The solution is visually checked for turbidity. Concurrently, the turbidity is measured at a wavelength of 660 nm, with use of a 10 mm glass cell.

### <Viscosity>

A viscosity of protein material is determined by preparing aqueous solution so that a protein content of the solution is 10% by mass, and measured with a B-type viscometer (preferably manufactured by Brookfield) using "#LV-1" rotor at 60°C. The viscosity is measured value after 1 minute at 100 rpm. If measurement cannot be performed using "#LV-1", rotor is changed to "#LV-2", "#LV-3", "#LV-4", and "#LV-5", in order. If it is impossible to measure due to low viscosity at "#LV-1"/100 rpm, it is evaluated as "lower limit". If it is impossible to measure due to high viscosity at "#LV-5"/100 rpm, it is evaluated as "off-scale high".

### <Median diameter of emulsion>

The median diameter is measured with a laser diffraction particle distribution measuring device (preferably, a manufactured by Shimadzu Corporation). A denatured protein material, fat and water are mixed to prepare emulsions having crude protein contents of 1%, 0.5%, 0.1%, and 0.05%, and an oil content of 20%, to obtain emulsions to be used as samples. The median diameter is determined basically by rounding off a numerical value of the one decimal place. Alternatively, in a case where the value is small, two significant digits will be remained after rounding off the next digit.

Examples

Embodiments of the present invention will be explained more specifically below, with reference to Examples. In Examples, "%" and "part" mean "% by mass" and "part by mass", respectively, unless otherwise specifically noted.

### Test Example 1: Examination of protein denaturation

To an aqueous solution of soy protein isolate (manufactured by Fuji Oil Co., Ltd.), arginine was added as a denaturant while adjusting the concentration to 0.5 M. The aqueous solution was then heated at 121°C for 10 minutes, put in a MW3500 dialysis tube to remove the denaturant, and then freeze-dried to obtain a powdery protein material (referred to as Arg). Arg, MCT 64 (medium-chain triglyceride, manufactured by Fuji Oil Co., Ltd.), and water were mixed, while adjusting the oil content to 20%, and the crude protein concentration to 1%, 0.5%, 0.1%, or 0.05%, followed by sonication, to prepare each emulsion. The prepared emulsion was stored in a refrigerator, and the median diameter was measured with use of a laser diffraction particle distribution measuring device (manufactured by Shimadzu Corporation). A raw material soy protein isolate was used as a control, with which an emulsion was prepared in the same manner for the measurement of median diameter. Results are summarized in Table 2.

**[Table 2]**

| Protein content | 1% | 0.5% | 0.1% | 0.05% |
|---|---|---|---|---|
| | Median diameter (µm) | | | |
| Arg | 2.3 | 3.2 | 99.0 | 143.7 |
| Soy protein isolate | 17.2 | 25.6 | 179.7 | 154.8 |

The results showed that an improved emulsifying capacity, as compared with that of the soy protein isolate, was obtained by adding the denaturant and by heating.

### Test Example 2: Examination of molecular weight distribution

An emulsion was prepared in the same manner as in Test Example 1, except that soy peptide (Hinute AM, manufactured by Fuji Oil Co., Ltd.), enzyme-digested soy protein isolate (manufactured by Fuji Oil Co., Ltd.), or Sample A descried in Patent Document 3 (referred to as protein material of Patent Document 3, hereinafter) was used, in place of the soy protein isolate, and the median diameter was measured. Results are summarized in Table 3. Also the molecular weight distribution of each of Arg, soy protein isolate, enzyme-digested soy protein isolate, and the protein material of Patent Document 3 was measured according to the aforementioned method. A molecular weight of 20,000 Da corresponds to an RT of 38.4 minutes, 10,000 Da corresponds to an RT of 41.2 minutes, and 2,000 Da corresponds to an RT of 48.2 minutes. Results are summarized in Fig. 1 and Table 4.

**[Table 3]**

| Protein content | 1% | 0.5% | 0.1% | 0.05% |
|---|---|---|---|---|
| | Median diameter (µm) | | | |
| Soy peptide | 259.0 | 303.0 | 377.4 | 327.6 |
| Enzyme-digested soy protein isolate | 8.3 | 9.4 | 19.4 | 35.5 |
| Protein material of Patent Document 3 | 2.4 | 4.1 | 9.1 | 21.3 |
| Soy protein isolate | 17.2 | 25.6 | 179.7 | 154.8 |

**[Table 4]**

| | ≥ 20,000 Da | < 20,000 Da and ≥ 2,000 Da | < 2,000 Da | ≥ 10,000 Da |
|---|---|---|---|---|
| Arg | 59 | 34 | 7 | 69 |
| Soy peptide | 0 | 20 | 80 | 0 |
| Enzyme-digested soy protein isolate | 40 | 48 | 13 | 51 |
| Soy protein isolate | 81 | 13 | 7 | 85 |
| Protein material of Patent Document 3 | 55 | 38 | 7 | 67 |

As summarized in Table 3, the soy peptide digested almost down to di- and tri-peptides was found to lose the emulsifying capacity. In contrast, the enzyme-digested soy bean isolate was found to have emulsifying capacity superior to that of the soy protein isolate. Judging collectively from the molecular weight distribution summarized in Table 4, a fraction of 2,000 Da or more and less than 20,000 Da excels in the emulsifying capacity, which was presumably expected to be further improved by denaturation.

### Example 1: Preparation of denatured protein material

To an aqueous solution of soy protein isolate (manufactured by Fuji Oil Co., Ltd.), arginine was added as a denaturant while adjusting the concentration to 0.5 M. The aqueous solution was heated at 121°C for 10 minutes, then desalted, adjusted to pH 4.5 with hydrochloric acid, and centrifuged at 10,000 G for 10 minutes, to collect a supernatant. The collected supernatant was desalted in a MW3500 dialysis tube, centrifuged again at 10,000 G for 10 minutes, and the supernatant was collected and freeze-dried, to obtain a denatured protein material A.

To an aqueous solution of soy protein isolate (manufactured by Fuji Oil Co., Ltd.), guanidine hydrochloride was added as a denaturant while adjusting the concentration to 4 M. The aqueous solution was heated at 121°C for 10 minutes, then cooled, adjusted to pH 4.5 with hydrochloric acid, and centrifuged at 10,000 G for 10 minutes, to collect a supernatant. The collected supernatant was desalted in a MW3500 dialysis tube, centrifuged again at 10,000 G for 10 minutes, and the supernatant was collected and freeze-dried, to obtain a denatured protein material B.

To an aqueous solution of enzyme-digested soy protein isolate (manufactured by Fuji Oil Co., Ltd.), arginine was added as a denaturant while adjusting the concentration to 0.5 M. The aqueous solution was heated at 121°C for 10 minutes, then desalted, adjusted to pH 4.5 with hydrochloric acid, and centrifuged at 10,000 G for 10 minutes, to collect a supernatant. The collected supernatant was desalted in a MW3500 dialysis tube, centrifuged again at 10,000 G for 10 minutes, and the supernatant was collected and freeze-dried, to obtain a denatured protein material C.

To an aqueous solution of enzyme-digested soy protein isolate (manufactured by Fuji Oil Co., Ltd.), urea was added as a denaturant while adjusting the concentration to 4 M. The aqueous solution was heated at 121°C for 10 minutes, then desalted, adjusted to pH 4.5 with hydrochloric acid, and centrifuged at 10,000 G for 10 minutes, to collect a supernatant. The collected supernatant was desalted in a MW3500 dialysis tube, centrifuged again at 10,000 G for 10 minutes, and the supernatant was collected and freeze-dried, to obtain a denatured protein material D.

To an aqueous solution of enzyme-digested soy protein isolate (manufactured by Fuji Oil Co., Ltd.), guanidine hydrochloride was added as a denaturant while adjusting the concentration to 4 M. The aqueous solution was heated at 121°C for 10 minutes, then desalted in a MW3500 dialysis tube, centrifuged again at 10,000 G for 10 minutes, and the supernatant was collected and freeze-dried, to obtain a denatured protein material E.

Emulsion was prepared with use of each of the denatured protein materials A to E in the same manner as in Test Example 1, and the median diameter was measured. Results are summarized in Table 5. The molecular weight distribution of each of the denatured protein materials A to E was measured according to the aforementioned method. Results are summarized in Fig. 2 and Table 6. All of these denatured protein materials were found to have protein contents of 80% by mass or more.

**[Table 5]**

| Protein content | 1% | 0.5% | 0.1% | 0.05% |
|---|---|---|---|---|
| | Median diameter (µm) | | | |
| Denatured protein material A | 1.8 | 2.0 | 88.3 | 213.7 |
| Denatured protein material B | 1.7 | 2.3 | 27.9 | 28.2 |
| Denatured protein material C | 2.1 | 2.5 | 114.5 | 292.7 |
| Denatured protein material D | 1.7 | 1.9 | 2.4 | 2.1 |
| Denatured protein material E | 2.5 | 2.5 | 11.7 | 32.1 |

**[Table 6]**

| | ≥ 20,000 Da | < 20,000 Da and ≥ 2,000 Da | < 2,000 Da | ≥ 10,000 Da |
|---|---|---|---|---|
| Denatured protein material A | 14 | 64 | 22 | 27 |
| Denatured protein material B | 16 | 55 | 30 | 30 |
| Denatured protein material C | 5 | 65 | 29 | 11 |
| Denatured protein material D | 3 | 55 | 42 | 7 |
| Denatured protein material E | 21 | 60 | 19 | 31 |

As summarized in Table 5, the denatured protein materials having specific molecular weight distributions were found to demonstrate an improved emulsifying capacity. While the protein material of Patent Document 3 demonstrated the emulsifying capacity at a crude protein content of 1% or more, the denatured protein materials of the present invention demonstrated good emulsifying capacity even at a lower crude protein content of 0.5% or more.

The denatured protein material A was dissolved in distilled water, and the pH was adjusted with NaOH, to prepare a 10 mass% solution of pH 7. The solution, after allowed to stand overnight, demonstrated an OD660nm of 0.13 at room temperature. The solution also demonstrated a viscosity at 60°C of 3.1 mPa·s.

### Addition of guanidine hydrochloride and ammonium sulfate

Guanidine hydrochloride and ammonium sulfate were added to the denatured protein materials A to E, soy peptide, enzyme-digested soy protein isolate, and soy protein isolate, according to the aforementioned methods. Results are summarized in Table 7.

**[Table 7]**

| | 250 mM Guanidine hydrochloride | | 2 M Ammonium Sulfate | |
|---|---|---|---|---|
| | Visual Observation | 0D660 nm | Visual Observation | 0D660 nm |
| Denatured protein material A | Clear | 0.0 | Turbid | 0.8 |
| Denatured protein material B | Clear | 0.0 | Turbid | 0.5 |
| Denatured protein material C | Clear | 0.1 | Turbid | 0.5 |
| Denatured protein material D | Clear | 0.1 | Turbid | 1.0 |
| Denatured protein material E | Clear | 0.1 | Turbid | 0.3 |
| Soy peptide | Clear | 0.0 | Clear | 0.0 |
| Enzyme-digested soy protein isolate | Turbid | 1.3 | Turbid | 0.3 |
| Soy protein isolate | Turbid | 0.7 | Turbid | 0.5 |
| Protein material of Patent Document 3 | Turbid | 0.4 | Turbid | 0.7 |

As summarized in Table 7, the denatured protein materials A to E did not become turbid even after addition of guanidine hydrochloride, proving that the protein had been denatured. The soy peptide digested almost down to di- and tri-peptides was found to remain clear even after addition of ammonium sulfate, meanwhile the other samples became turbid upon addition of ammonium sulfate.

### Example 2: Study on proteins other than soy protein

In place of the soy protein isolate, used were pea protein isolate, mung bean protein, and broad bean protein, which were subjected to denaturation/molecular weight distribution adjustment treatment, to obtain denatured protein materials F, G, and H, respectively. The median diameter of the emulsion and the molecular weight distribution of the protein materials were then measured, in the same manner as in Example 1. Results are summarized in Tables 8 and 9. All of these denatured protein materials were found to have protein contents of 80% by mass or more.

**[Table 8]**

| Protein content | 1% | 0.5% | 0.1% | 0.05% |
|---|---|---|---|---|
| | Median diameter (µm) | | | |
| Denatured protein material F | 1.5 | 1.6 | 6.9 | 27.6 |
| Denatured protein material G | 1.9 | 2.6 | 25.0 | 57.9 |
| Denatured protein material H | 1.3 | 1.9 | 11.9 | 27.0 |

**[Table 9]**

| | ≥ 20,000 Da | < 20,000 Da and ≥ 2,000 Da | < 2,000 Da | ≥ 10,000 Da |
|---|---|---|---|---|
| Denatured protein material F | 12 | 68 | 20 | 25 |
| Denatured protein material G | 5 | 60 | 36 | 20 |
| Denatured protein material H | 12 | 63 | 25 | 26 |

As described above, the denatured protein materials having an improved emulsifying capacity were also obtainable from pea protein, mung bean protein and broad bean protein, when used in place of soy protein. Also these denatured protein materials did not become turbid upon addition of guanidine hydrochloride, and became turbid upon addition of ammonium sulfate.

### Industrial Applicability

The denatured protein material having the specific molecular weight distribution has an improved emulsifying capacity, as compared with conventional protein materials. The denatured protein material is applicable typically to food, composition, and pharmaceutical composition.

## Claims

1. A denatured protein material having both of features a) and b) below:
a) a measured molecular weight distribution shows that an area ratio of 2,000 Da or more and less than 20,000 Da is 45 to 90%; and
b) an aqueous solution of the denatured protein material with a crude protein concentration of 0.1% remaining unturbid upon addition of a 250 mM guanidine hydrochloride solution, and becoming turbid upon addition of 2 M ammonium sulfate.

2. The denatured protein material according to claim 1, wherein a measured molecular weight distribution shows that an area ratio of less than 2,000 Da is 45% or less.

3. The denatured protein material according to claim 1, wherein a measured molecular weight distribution shows that an area ratio of 10,000 Da or more is less than 50%.

4. The denatured protein material according to claim 1, wherein a measured molecular weight distribution shows that an area ratio of less than 2,000 Da is 45% or less, and an area ratio of 10,000 Da or more is less than 50%.

5. The denatured protein material according to claim 1, wherein an aqueous solution of the denatured protein material, prepared while adjusting the protein content to 10% by mass and pH to 7, demonstrates an OD660nm of 0.5 or less.

6. The denatured protein material according to claim 4, wherein an aqueous solution of the denatured protein material, prepared while adjusting the protein content to 10% by mass and pH to 7, demonstrates an OD660nm of 0.5 or less.

7. The denatured protein material according to claim 1, being free of an animal protein.

8. The denatured protein material according to claim 1, being derived from bean.

9. The denatured protein material according to claim 4, being derived from bean.

10. The denatured protein material according to claim 6, being derived from bean.
